# EUROPÄISCHE PATENTSCHRIFT

(11) **EP 1 036 700 B1**
(45) Veröffentlichungstag und Bekanntmachung des Hinweises auf die Patenterteilung: **06.08.2003**
(21) Anmeldenummer: 99124788.3
(22) Anmeldetag: 14.12.1999
(51) Int. Cl.: B60P 3/36

(54) **Aussentür für einen Wohnwagen, ein Wohnmobil oder dgl.**
External door for a camper, caravan or the like
Porte extérieure pour camping-bus, caravane ou similaire

(30) Priorität: 18.03.1999 DE 19912077
(43) Veröffentlichungstag der Anmeldung: 20.09.2000
(73) Patentinhaber: HAPPICH Fahrzeug- und Industrieteile GmbH, 42285 Wuppertal (DE)
(72) Erfinder: Nuyan, Vedat, 42281 Wuppertal (DE); Bollmann, Rainer, 42111 Wuppertal (DE)

(56) Entgegenhaltungen:
- EP-A- 0 780 540
- CA-A- 2 128 041
- DE-U- 29 813 209
- US-A- 5 048 587

## Beschreibung

Die Erfindung bezieht sich auf eine Außentür für einen Wohnwagen, ein Wohnmobil oder dgl. der im Oberbegriff des Anspruchs 1 näher angegeben Art.

Die gattungsgemässe Druckschrift DE 298 13 209 U1 zeigt eine Insektenschutzgittertür für Freizeitmobile, die sich dadurch auszeichnen soll, daß sich dieselbe an Scharnieren um dieselbe Drehachse dreht, an der auch die Zugangstür angeschlagen ist, daß sich Insektenschutzgittertür und Zugangstür gemeinsam oder getrennt öffnen und schließen lassen und daß zur Abdichtung des Innenraums gegen die Außenseite bei geschlossener Stellung von Zugangstür und Insektenschutzgittertür eine einzige Dichtung verwandt wird. In dieser Druckschrift ist weiterhin angegeben, daß die Insektenschutzgittertür als Falttür ausgeführt sein kann.

Der Erfindung liegt nun ausgehend von einer Außentür der eingangs genannten Art die Aufgabe zugrunde, Vorsorge dafür zu treffen, daß die Türhälften der Insektenschutzgittertür in ihrer Gebrauchslage längs ihrer aneinandergrenzenden Rahmenprofilleisten sicher aneinanderfestgelegt und abgedichtet sind.

Die zur Lösung dieser Aufgabe erfindungsgemäß vorgesehenen Maßnahmen sind im kennzeichnenden Teil des Patentanspruchs 1 angegeben.

Der besondere Vorteil der Erfindung ist in der Rastprofilleiste und deren Anordnung zu sehen, die in der Gebrauchslage der Insektenschutzgittertür zum einen die Türhälften aneinanderfestlegt, indem sie in der einen Nut fest und in der anderen Nut lösbar verankert ist und zum anderen dafür sorgt, daß zwischen den aneinandergrenzenden Türhälften eine Spaltabdichtung erfolgt.

Eine besonders vorteilhafte Weiterbildung der Erfindung ist im Anspruch 2 angegeben. Durch diese Maßnahme läßt sich die Insektenschutzgittertür bei Nichtgebrauch besonders platzsparend unterbringen, wobei sie auch bündig mit der Außentür abschließen kann.

Eine diese Weiterbildung optimierende Maßnahme ist Gegenstand des Anspruchs 3. Diese Maßnahme ergänzt die zuverlässig gehaltene Unterbringung der Insektenschutzgittertür in der Nichtgebrauchslage und die Rastprofilleiste in bezug auf eine weitere Funktion, durch die ein ungewolltes Ausschwenken der Insektenschutzgittertür verhindert wird.

Vorteilhafte Ausgestaltungen der Erfindung sind in weiteren Unteransprüchen angegeben.

Ein Ausführungsbeispiel der Erfindung wird nachfolgend anhand der Zeichnungen erläutert, und es zeigen:
- Fig. 1: eine Ansicht der Außentür mit Insektenschutzgittertür,
- Fig. 2: die Außentür mit Insektenschutzgittertür nach Fig. 1 angeordnet in einem Türrahmen im Horizontalschnitt,
- Fig. 3: eine Darstellung einer geöffneten Außentür und einer geschlossenen Insektenschutzgittertür im Horizontalschnitt,
- Fig. 4: eine vergrößerte Einzelheit gemäß Pfeilrichtung IV in Fig. 3 und
- Fig. 5: eine vergrößerte Einzelheit gemäß Pfeilrichtung V in Fig. 2.

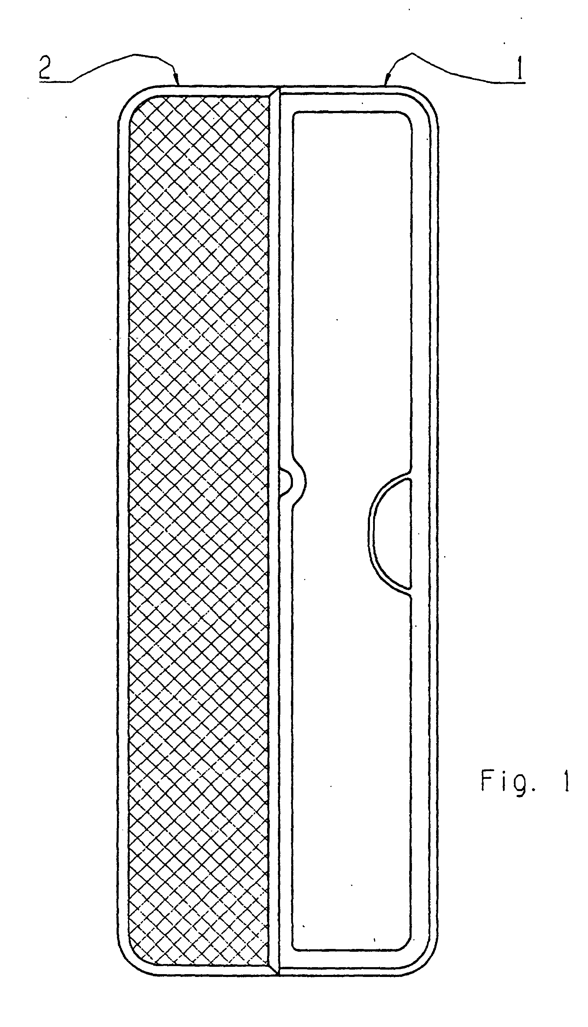

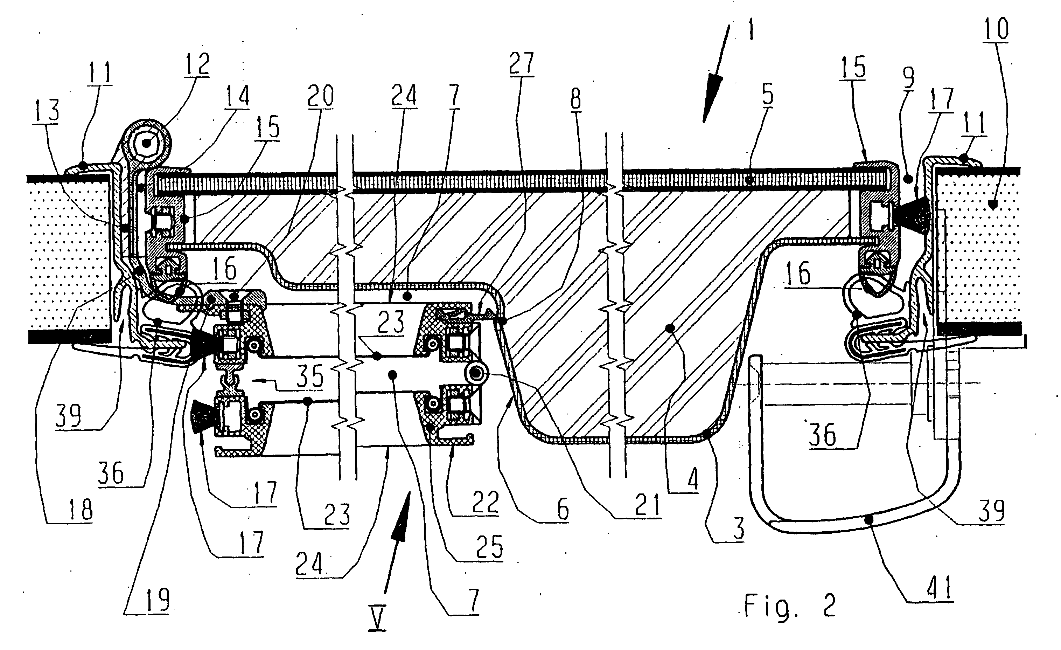

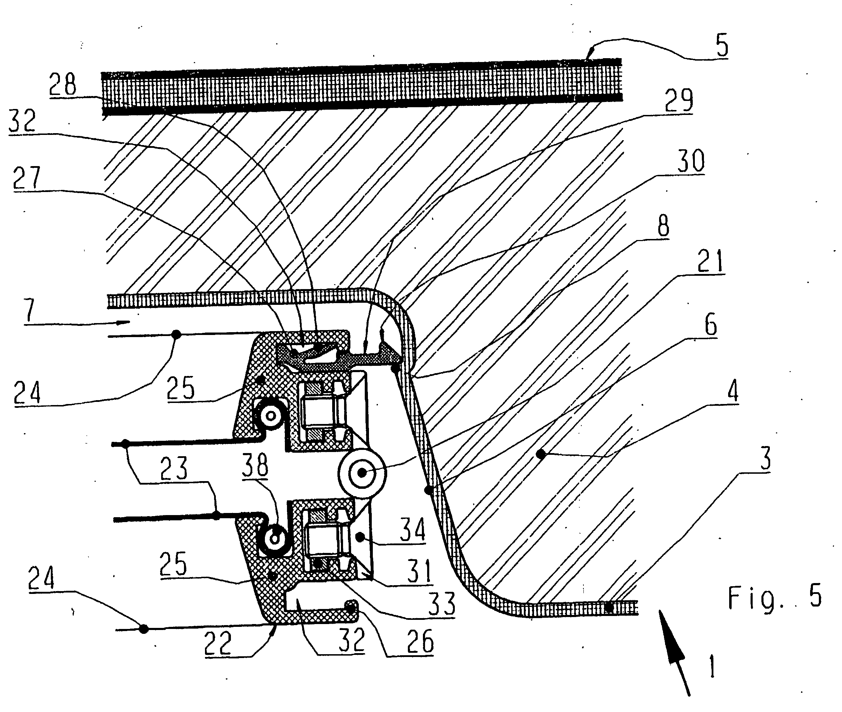

Die Außentür nach Fig. 1 zeigt deren Türblatt 1 mit der daran angeordneten Insektenschutzgittertür 2. Der Aufbau des Türblatts 1 ergibt sich deutlich aus den Fig. 2 und 5. Danach weist das Türblatt 1 einen dreilagigen Aufbau mit einer aus einer tiefgezogenen Kunststoffolie gebildeten Innenlage 3, einer aus aufgeschäumten Kunststoff gebildeten Zwischenlage 4 und einer zumindest eine Blechhaut aufweisenden Außenlage 5 auf. Bevorzugt besitzt auch die Außenlage 5 ihrerseits einen dreischichtigen Aufbau mit einer äußeren dekorativen Blechhaut, einer inneren Blechhaut und einer dazwischen angeordneten Holz- oder Kunststofflage. Dieser Aufbau ermöglicht es, am Türblatt 1 nichtgezeigte Türfeststeller, Lüftungsgitter, Blenden und dgl. mehr zuverlässig festlegen zu können, weil die Befestigungselemente an der Blechhaut bzw. an den Blechhäuten einen guten Halt finden.

Etwa längsmittig weist das Türblatt 1 einen durch eine stufenförmige Absetzung 6 begrenzten Aufnahmeraum 7 auf, welcher - wie aus Fig. 1, 2 und 5 ersichtlich - zur Aufnahme der Insektenschutzgittertür 2 dient, wenn sich diese in ihrer Nichtgebrauchslage befindet. Im Bereich der stufenförmigen Absetzung 6 ist durchlaufend ein Rastnocken 8 ausgeformt.

Das Türblatt 1 ist in einer Türöffnung 9 einer Wohnwagen- oder Wohnmobilwand 10 angeordnet und hier an einem Türrahmen 11 schwenkbar angelenkt, wozu eine Tür-Schwenkachse 12 vorgesehen ist und Scharniere mit Scharnierlappen 13 und 14. Die Scharnierlappen 13 sind am Türrahmen 11 befestigt, während die Scharnierlappen 14 an einer das Türblatt 1 umgebenden Profilleiste 15 befestigt sind. Die Profilleiste 15 weist eine Nut mit einer darin angeordneten Dichtprofilleiste 16 auf. An der der Tür-Schwenkachse 12 abgewandten Seite des Türblatts 1 ist an der Profilleiste 15 eine gegen den Türrahmen 11 wirkende Bürstendichtung 17 festgelegt.

Die Tür-Schwenkachse 12 durchsetzt auch das Auge eines Scharnierlappens 18 oder deren mehrere. Dieser weist einen die Dichtungsprofilleiste 16 überragenden Steg 19 auf, an dem die Insektenschutzgittertür 2 über Befestigungselemente 20 festgelegt ist.

Die Insektenschutzgittertür 2 besteht aus zwei über eine vertikal ausgerichtete Schwenkachse 21 miteinander verbundenen, jeweils einen Rahmen 22 und ein daran festgelegtes, die Rahmenöffnung überspannendes Insektenschutzgitter 23 aufweisenden Türhälften 24. Jede Türhälfte 24 weist schwenkachsenseitig aneinandergrenzende Rahmenprofilleisten 25 auf. Diese sind jeweils mit einer längsdurchlaufenden Nut 32 ausgebildet, die nuteingangsseitig durch einen Materialansatz 26 im Sinne einer Hinterschnittbildung verengt sind. Wie insbesondere aus Fig. 5 ersichtlich ist, dient eine Nut 33 zur Aufnahme einer sich über die gesamte Nutlänge erstreckenden Rastprofilleiste 27. Die Rastprofilleiste 27 ist ein extrudiertes relativ hart eingestelltes Kunststoffprofil mit einem sich hinter dem Materialansatz 26 abstützenden Federarm 28 und insbesondere mit einem die Nut 32 überragenden Steg 29 mit einer Rastnase 30 am freien Stegende.

Wie schon erwähnt, sind die Türhälften 24 um die Schwenkachse 21 schwenkbar. Die Schwenkachse 21 durchsetzt Scharnieraugen von Scharnier-Wie schon erwähnt, sind die Türhälften 24 um die Schwenkachse 21 schwenkbar. Die Schwenkachse 21 durchsetzt Scharnieraugen von Scharnierlappen 31, die über Befestigungselemente an den Rahmenprofilleisten 25 festgelegt sind. Als Befestigungselemente können in einem Profilkanal angeordnete Kulissensteine 33 und Senkkopfschrauben 34 vorgesehen sein. Die so zur Insektenschutzgittertür 2 miteinander verbundenen Türhälften 24 sind in der Nichtgebrauchslage aufeinandergeklappt und im Aufnahmeraum 7 des Türblatts 1 untergebracht. Hier werden die Türhälften 24 zum einen dadurch gehalten, daß die Rastnase 30 der Rastprofilleiste 27 den Rastnocken 8 des Türblatts 1 hintergreift. Zum anderen sind die Türhälften 24 durch an ihre Rahmen 22 angeordnete Klipsleisten 35 aneinander festgelegt.

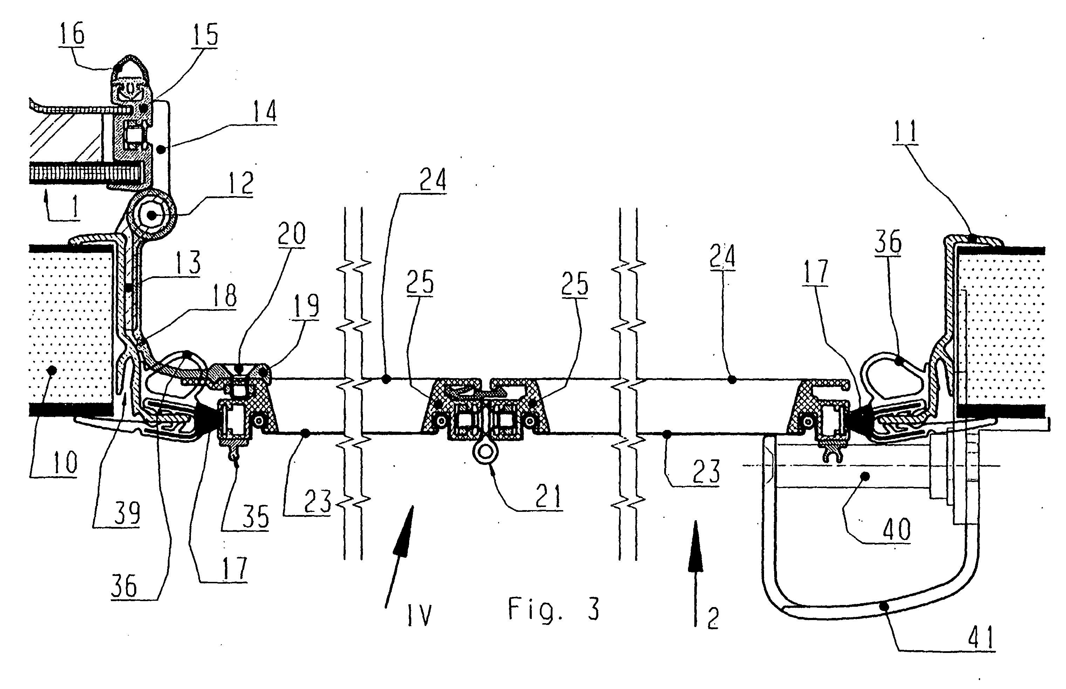

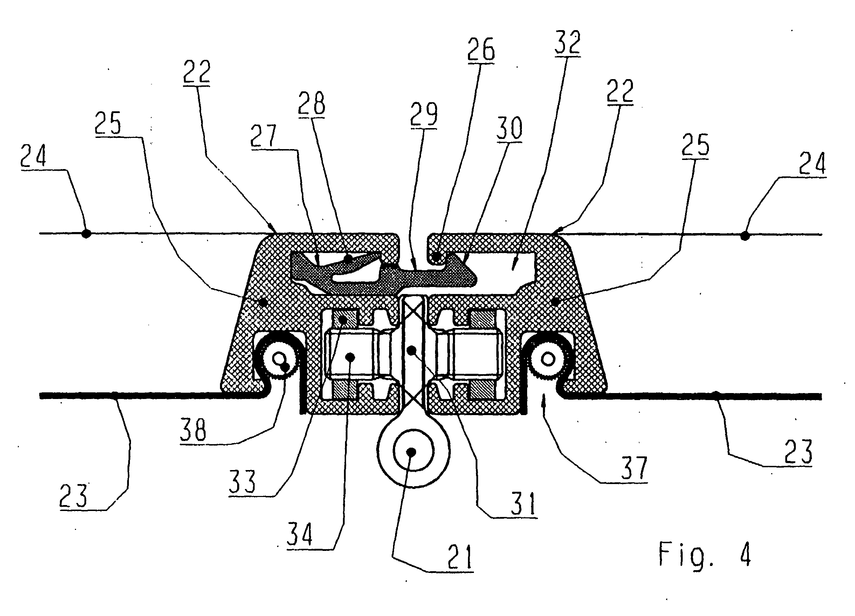

Bei der Inbenutzungnahme der Insektenschutzgittertür 2 werden zunächst das Türblatt (nach außen) geöffnet, die Rastnase 30 vom Rastnocken 8 abgezogen und die Klipsleisten 35 voneinander getrennt. Danach wird die zuoberst liegende Türhälfte 24 von der zuunterstliegenden Türhälfte 24 weggeschwenkt, bis die Türhälften 24 in einer Ebene nebeneinanderliegen (Fig. 3 und 4). Dabei gleitet die Rastnase 30 in die aufnahmebereite Nut 32, um dort den Materialansatz 26 zu hintergreifen. Dadurch sind dann die Türhälften 24 starr miteinander verbunden und der Spalt zwischen diesen ist abgedichtet. Durch eine Zugkraft in Pfeilrichtung F läßt sich die Verbindung wieder entkuppeln, wozu ggf. ein nichtgezeigtes Griffelement benutzt werden kann.

In den äußeren Profilleisten der Insektenschutzgittertür 2 angebrachte Bürstendichtungen 17 bieten eine zusätzliche Abdichtung. Eine besonders zuverlässige Abdichtung wird noch durch eine mit dem Türrahmen 11 verbundene Dichtprofilleiste 36 bewirkt, die mit der Dichtprofilleiste 16 aber auch mit dem Steg 19 des Scharnierlappens 18 zusammenwirkt.

Das Insektenschutzgitter 23 ist mit einem umlaufenden Randbereich in einer umlaufenden Nut 37 eines jeden Rahmens 22 angeordnet und hier durch ein Klemmprofil 38 gehalten.

Zum Türrahmen 11 gehören nichtgezeigte Klemmprofilleisten oder Klammern, für deren Steckmontage am Türrahmen 11 ein Aufnahmekanal 39 vorgesehen ist.

Es ist noch zu erwähnen, daß das Türblatt 1 in der geschlossenen Lage und die Insektenschutzgittertür 2 in der Gebrauchslage an einem Rastbolzen 40 gesichert sind und daß für den Rastbolzen 40 ein Schutzbügel 41 vorgesehen ist.

## Patentansprüche

1. Außentür für einen Wohnwagen, ein Wohnmobil oder dgl. mit einem an einem Türrahmen (11) schwenkbar angelenkten Türblatt (1) und einer ebenfalls am erwähnten Türrahmen (11) angelenkten Insektenschutzgittertür (2), die aus zwei über eine vertikal ausgerichtete Schwenkachse (21) miteinander verbundenen, jeweils einen Rahmen (22) und ein daran festgelegtes, die Rahmenöffnung überspannendes Insektenschutzgitter (23) aufweisenden Türhälften (24) besteht, wobei es die Schwenkachse (21) ermöglicht, daß eine der in der Nichtgebrauchslage aufeinanderliegenden und parallel zum Türblatt (1) ausgerichteten Türhälften (24) um 180 Winkelgrade in die Gebrauchslage schwenkbar ist, um die Außentüröffnung (9) auch bei geöffneter Außentür geschlossen zu halten, **dadurch gekennzeichnet, daß** die schwenkachsenseitig aneinandergrenzenden Rahmenprofilleisten (25) der Türhälften (24) jeweils eine längsdurchlaufende hinterschnittene Nut (32) aufweisen, daß in eine der Nuten (32) eine sich über deren Länge erstreckende Rastprofilleiste (27) verankert ist, daß die Rastprofilleiste (27) einen die Nut (32) überragenden Steg (29) mit einer Rastnase (30) am freien Stegende aufweist und daß die andere Nut (32) zur lösbar hinterrastenden Aufnahme der Rastnase (30) in der Gebrauchslage der Insektenschutzgittertür (2) dient.

2. Außentür nach Anspruch 1, **dadurch gekennzeichnet, daß** das Türblatt (1) einen durch eine längsmittig verlaufende stufenförmige Absetzung (6) begrenzten Aufnahmeraum (7) für die in der Nichtgebrauchslage aufeinanderliegenden Türhälften (24) der Insektenschutzgittertür (2) aufweist.

3. Außentür nach Anspruch 1 oder 2, **dadurch gekennzeichnet, daß** das Türblatt (1) im Bereich der stufenförmigen Absetzung (6) durchlaufend. einen vorspringenden Rastnocken (8) zum Hinterrasten der Rastnase (30) aufweist.

4. Außentür nach wenigstens einem der Ansprüche 1 bis 3, **dadurch gekennzeichnet, daß** die längsdurchlaufenden Nuten (32) der Rahmenprofilleisten (25) am offenen Endbereich einen einwärts gerichteten, eine Hinterschneidung bildenden Materialansatz (26) aufweisen.

5. Außentür nach wenigstens einem der Ansprüche 1 bis 4, **dadurch gekennzeichnet, daß** die Rastprofilleiste (27), die aus einem extrudierten Kunststoffprofil besteht mit einem sich hinter einem Materialansatz (26) abstützenden Federarm (28) ausgebildet ist.

6. Außentür nach wenigstens einem der Ansprüche 1 bis 5, **dadurch gekennzeichnet, daß** die Türhälften (24) an ihre Rahmen (22) angeordnete Klipsleisten (35) tragen, die die Türhälften (24) in ihrer Nichtgebrauchslage aneinanderhalten.

7. Außentür nach wenigstens einem der vorangegangenen Ansprüche, **dadurch gekennzeichnet, daß** am Türrahmen (11) eine Dichtprofilleiste (36) angeordnet ist, die einerseits an einer zweiten am Türblatt (1) angeordneten Dichtprofilleiste (16) anliegt und die andererseits gegen eine Stegverlängerung (19) der die Insektenschutzgittertür (2) tragenden Scharnierleiste (18) abdichtet.

8. Außentür nach wenigstens einem der vorangegangenen Ansprüche, **dadurch gekennzeichnet, daß** die Insektenschutzgittertür (2) am Außenumfang eine Bürstendichtung (17) oder dgl. aufweist.

9. Außentür nach wenigstens einem der vorangegangenen Ansprüche, **dadurch gekennzeichnet, daß** die Rahmen (22) der Insektenschutzgitter-Türhälften (24) jeweils eine umlaufende Nut (37) zur Aufnahme des umlaufenden Randbereichs eines Insektenschutzgitters (23) sowie eines Klemmprofils (38) aufweisen.

10. Außentür nach wenigstens einem der vorangegangenen Ansprüche, **dadurch gekennzeichnet, daß** das Türblatt (1) einen dreilagigen Aufbau mit einer aus einer tiefgezogenen Kunststoffolie gebildeten Innnenlage (3), einer aus aufgeschäumten Kunststoff gebildeten Zwischenlage (4) und einer zumindest eine Blechhaut aufweisenden Außenlage (5) aufweist.

11. Außentür nach Anspruch 10, **dadurch gekennzeichnet, daß** die Außenlage (5) des Türblatts (1) einen dreischichtigen Aufbau aufweist mit einer äußeren dekorativen Blechhaut, einer inneren Blechhaut und einer dazwischen angeordneten Holz- oder Kunststofflage

## Claims

1. Outside door for a caravan, a motor home or the like, having a door leaf (1) which is coupled to a door frame (11) in a manner allowing it to swivel, and an insect-protection mesh door (2) which is likewise coupled to the mentioned door frame (11) and comprises two door halves (24) which are connected to each other via a vertically orientated swivelling spindle (21) and each have a frame (22) and an insect-protection mesh (23) which is secured on the frame and spans the frame opening, the swivelling spindle (21) making it possible for one of the door halves (24), which rest on each other in the not-in-use position and are orientated parallel to the door leaf (1), to be swivelled through 180 angular degrees into the in-use position, in order to keep the outside door opening (9) closed even if the outside door is open, **characterized in that** the frame profile strips (25) of the door halves (24), which strips are adjacent to each other at the swivelling spindle, each have an undercut groove (32) running longitudinally through them, **in that** there is secured in one of the grooves (32) a latching profile strip (27) which extends over its length, **in that** the latching profile strip (27) has a web (29) protruding over the (32) with a latching lug (30) at the free end of the web, and **in that** the other groove (32) is used for holding the latching lug (30) in a releasable manner by latching behind it in the in-use position of the insect-protection mesh door (2).

2. Outside door according to Claim 1, **characterized in that** the door leaf (1) has a receiving space (7), which is bounded by a step-shaped shoulder (6) running longitudinally and centrally, for the door halves (24) of the insect-protection mesh door (2), which halves rest on each other in the not-in-use position.

3. Outside door according to Claim 1 or 2, **characterized in that** the door leaf (1) has a projecting latching cam (8) running through it in the region of the step-shaped shoulder (6) for the purpose of latching behind the latching lug (30).

4. Outside door according to at least one of Claims 1 to 3, **characterized in that** the grooves (32) of the frame profile strips (25), which grooves run longitudinally through them, have, in the open end region, an inwardly directly material projection (26) forming an undercut.

5. Outside door according to at least one of Claims 1 to 4, **characterized in that** the latching profile strip (27), which consists of an extruded plastic profile, is designed with a spring arm (28) which is supported behind a material projection (26).

6. Outside door according to at least one of Claims 1 to 5, **characterized in that** the door halves (24) bear clip strips (35) which are arranged on their frames (22) and keep the door halves (24) against each other in their not-in-use position.

7. Outside door according to at least one of the preceding claims, **characterized in that** a sealing profile strip (36) is arranged on the door frame (11), said sealing profile strip, on the one hand, bearing against a second sealing profile strip (16) arranged on the door leaf (1) and, on the other hand, providing a seal against a web extension (19) of the hinge strip (18), which bears the insect-protection mesh door (2).

8. Outside door according to at least one of the preceding claims, **characterized in that** the insect-protection mesh door (2) has a brush seal (17) or the like on the outer circumference.

9. Outside door according to at least one of the preceding claims, **characterized in that** the frames (22) of the insect-protection mesh door halves (24) in each case have an encircling groove (37) for holding the encircling edge region of an insect-protection mesh (23) and of a clamping profile (38).

10. Outside door according to at least one of the preceding claims, **characterized in that** the door leaf (1) has a three-layered construction with an inner layer (3) formed from a moulded plastic sheet, an intermediate layer (4) formed from a foamed plastic, and an outer layer (5) having at least one sheet-metal skin.

11. Outside door according to Claim 10, **characterized in that** the outer layer (5) of the door leaf (1) has a three-layered construction with an outer, decorative sheet-metal skin, an inner sheet-metal skin and a wood or plastic layer arranged in between.

## Revendications

1. Porte extérieure pour caravane, mobilhome ou similaires, comprenant un battant de porte (1) articulé à pivotement sur un encadrement de porte (11) et une porte moustiquaire (2) qui est également articulée sur ledit encadrement de porte (11) et qui est constituée de deux vantaux (24) reliés l'un à l'autre sur un axe pivotant (21) dirigé verticalement et qui présentent chacun un châssis (22) et un treillis moustiquaire (23) fixé et tendu sur l'ouverture du châssis, l'axe pivotant (21) permettant à l'un des vantaux (24), qui en position de non-utilisation sont placés l'un contre l'autre et dirigés parallèlement au battant de porte (1), de pivoter de 180 degrés jusque dans la position d'utilisation de manière à maintenir aussi l'ouverture extérieure (9) close lorsque la porte extérieure est ouverte, **caractérisée en ce que** les profilés de châssis (25), adjacents l'un à l'autre du côté de l'axe pivotant, des vantaux (24) présentent chacun une rainure longitudinale (32) en contre-dépouille, **en ce qu'**un profilé d'encliquetage (27) s'étendant sur toute sa longueur est ancré dans l'une des rainures (32), **en ce que** le profilé d'encliquetage (27) présente une réglette (29) qui dépasse la rainure (32) et qui est dotée d'un nez d'encliquetage (30) à l'extrémité libre de la réglette et **en ce que** l'autre rainure (32) sert de logement en contre-dépouille et libérable du nez d'encliquetage (30) lorsque la porte moustiquaire (2) est en position d'utilisation.

2. Porte extérieure selon la revendication 1, **caractérisée en ce que** le battant de porte (1) présente un espace (7) de réception des vantaux (24) placés l'un contre l'autre en position de non-utilisation de la porte moustiquaire (2) et délimité par un retrait en gradin (6) le long de la ligne médiane.

3. Porte extérieure selon la revendication 1 ou 2, **caractérisée en ce que** le battant de porte (1) présente au niveau du retrait en gradin (6) une came d'encliquetage (8) en saillie et continue destinée à accrocher le nez d'encliquetage (30) par l'arrière.

4. Porte extérieure selon au moins l'une des revendications 1 à 3, **caractérisée en ce que** les rainures longitudinales continues (32) des profilés de châssis (25) présentent au niveau de leur extrémité ouverte un appendice de matière (26) dirigé en dedans, qui forme une contre-dépouille.

5. Porte extérieure selon au moins l'une des revendications 1 à 4, **caractérisée en ce que** le profilé d'encliquetage (27), qui est constitué d'un profilé en matière synthétique extrudé, est configuré avec un bras de ressort (28) qui s'appuie derrière un appendice de matière (26).

6. Porte extérieure selon au moins l'une des revendications 1 à 5, **caractérisée en ce que** les vantaux (24) portent des languettes d'encliquetage (35) disposées sur leur châssis (22), qui permettent de maintenir les vantaux (24) l'un contre l'autre dans leur position de non-utilisation.

7. Porte extérieure selon au moins l'une des revendications précédentes, **caractérisée en ce que** sur l'encadrement de porte (11) est disposé un profilé d'étanchéité (36) qui est d'une part contigu à un deuxième profilé d'étanchéité (16) disposé sur le battant de porte (1) et d'autre part calfeutre la prolongation de l'arcade (19) de la latte de charnière (18) qui porte la porte moustiquaire (2).

8. Porte extérieure selon au moins l'une des revendications précédentes, **caractérisée en ce que** le pourtour de la porte moustiquaire (2) présente un joint d'étanchéité en brosse (17) ou similaire.

9. Porte extérieure selon au moins l'une des revendications précédentes, **caractérisée en ce que** les châssis (22) des vantaux (24) de la porte moustiquaire présentent chacun une rainure périphérique (37) destinée à recevoir la bordure d'un treillis moustiquaire (23) ainsi qu'un profilé de serrage (38).

10. Porte extérieure selon au moins l'une des revendications précédentes, **caractérisée en ce que** le battant de porte (1) présente une structure en trois couches constituée d'une couche intérieure (3) formée d'une feuille de matière synthétique emboutie, d'une couche intermédiaire (4) formée de mousse synthétique expansée et d'une couche extérieure (5) qui présente au moins un revêtement en tôle.

11. Porte extérieure selon la revendication 10, **caractérisée en ce que** la couche extérieure (5) du battant de porte (1) présente une structure en trois couches constituée d'un revêtement extérieur décoratif en tôle, d'un revêtement intérieur en tôle et d'une couche de bois ou de matière synthétique disposée entre les deux.
